# EUROPÄISCHE PATENTSCHRIFT

(11) **EP 2 947 450 B1**
(45) Veröffentlichungstag und Bekanntmachung des Hinweises auf die Patenterteilung: **28.09.2016**
(21) Anmeldenummer: 14168838.2
(22) Anmeldetag: 19.05.2014
(51) Int. Cl.: G01N 21/35, G01J 3/42, G01N 21/31, G01N 21/27

(54) **Messgerät zur Messung einer bestimmten Gaskomponente**
Measuring device for the measurement of a certain gas component
Appareil de mesure d'un composant gazeux donné

(43) Veröffentlichungstag der Anmeldung: 25.11.2015
(73) Patentinhaber: SICK AG, 79183 Waldkirch (DE)
(72) Erfinder: Disch, Rolf, 79356 Eichstetten (DE); Ortwein, Pascal, 79276 Reute (DE)
(74) Vertreter: Ludewigt, Christoph

(56) Entgegenhaltungen:
- EP-A1- 2 320 027
- EP-A2- 0 480 753
- US-A- 3 805 074
- US-A1- 2008 078 544

## Beschreibung

Die Erfindung betrifft ein Messgerät zur Messung einer bestimmten Gaskomponente.

Es sind Messgeräte zur Bestimmung einer einzelnen Gaskomponente bekannt, die mit Hilfe der Lasermesstechnik (TDLS, tunable diode laser spectroscopy) oder nach dem Filterkorrelationsverfahren oder dem Gasfilterkorrelationsverfahren arbeiten. Nachteilig an der TDLS Technik ist, dass die verwendeten Laser sehr kostenaufwändig sind und viel Aufwand getrieben werden muss, damit störende Interferenzen vermieden werden. Nachteilig an Korrelationsverfahren (Gasfilterkorrelation oder Filterkorrelation- oder Bifrequenzkorrelationsverfahren) ist eine notwendige, aufwändige, umfangreiche Mechanik in Form von Filter- und/oder Küvettenhalterungen, Motoren für Chopper etc.. Diese notwendige Mechanik vergrößert den Bauraum. Des Weiteren sind die Wechselfrequenzen solcher Verfahren oft sehr langsam (im einstelligen Hertz-Bereich) und somit anfällig gegen niederfrequente Störungen. Insgesamt sind makromechanisch bewegte Teile störanfälliger.

Aus den Dokumenten EP 2 320 027 A1, US 2008/0078544 A1 und US 3,805,074 sind Gasmessgeräte bekannt, bei denen das Licht mittels mikromechanischer Spiegel einerseits auf einen eine Meszelle enthaltenden Messpfad und andererseits auf einen Referenzpfad geführt ist.

Ausgehend von diesem Stand der Technik ist es Aufgabe der Erfindung, ein Messgerät zur Messung einer Messkomponente bereitzustellen, das mit weniger makromechanischen, bewegten Komponenten realisiert werden kann, um die vorgenannten Nachteile zu vermeiden.

Diese Aufgabe wird gelöst mit einem Messgerät mit den Merkmalen des Anspruchs 1.

Das erfindungsgemäße Messgerät zur Messung einer bestimmten Gaskomponente ist ausgerüstet
- mit einer breitbandigen Lichtquelle, die ausgebildet ist, Licht intensitätsmoduliert abzugeben,
- und das Licht ausgehend von der Lichtquelle ein Messvolumen, in der das zu messende Gas vorliegt, durchsetzt,
- und das Licht nach Durchlaufen des Messvolumens mit einer ersten Lichtablenkeinheit, die wenigstens einen MEMS-Spiegel umfasst und das Licht abwechselnd auf zwei optische Pfade umlenkt,
- und der eine erste Pfad als Messpfad ausgebildet ist und ein erstes Filterelement enthält, das einen Messwellenlängenbereich durchlässt,
- und der andere zweite Pfad als Referenzpfad ausgebildet ist und ein zweites Filterelement enthält, das einen Referenzwellenlängenbereich durchlässt,
- mit einem optischen Element, das Mess- und Referenzpfad wieder auf einen gemeinsamen optischen Pfad führt,
- mit einem Lichtdetektor und
- mit einer Auswerte- und Steuereinheit zur Ansteuerung der Lichtquelle und der Lichtablenkeinheit und zur Auswertung detektierter Lichtintensitäten und damit Messung der Gaskomponente.

Ein besondere Vorteil besteht in der Ausbildung der Lichtablenkeinheit, die den Lichtstrahl einerseits auf einen ersten Messpfad oder alternativ auf einen zweiten Referenzpfad führt und die erfindungsgemäß wenigstens einen MEMS-Spiegel umfasst. Mit einer so ausgebildeten Lichtablenkeinheit ist das Messgerät mit günstigen und kleinen Bauelementen realisierbar. Durch die Nutzung der mikromechanischen Spiegel an Stelle von Choppervorrichtungen fallen makromechanisch bewegte Teile weg, die Bauform wird kleiner, das System weniger fehleranfällig. Es werden höhere Wechsel/Modulationsfrequenzen erzielt gegenüber sich drehenden mechanischen Filtern, Küvetten und/oder Chopperrädern.

Die Lichtablenkeinheit kann, wenn der abzulenkende Lichtstrahl optisch wenig aufgeweitet ist, nur einen MEMS-Spiegel enthalten oder wenn der Lichtstrahl aufgeweitet ist, auch als MEMS-Spiegelarray ausgebildet sein. Das Licht kann dann mit hohen Frequenzen zwischen Mess- und Referenzpfad hin und her geschaltet werden.

Weitere Vorteile der Erfindung sind die kostengünstigeren Einsatzmöglichkeiten von Nichtlaserquellen, bei denen Interferenzeffekte nicht auftreten.

In konventioneller Art kann in einer Ausführungsform die Lichtquelle ein CW-Lichtsendeelement und eine Choppervorrichtung zur Erzeugung der Modulation in Form von Lichtpulsen aufweisen. Besonders vorteilhaft ist es aber, wenn auch auf diese Choppervorrichtung verzichtet wird und die Lichtquelle eine LED als CW-Lichtsendeelement umfasst und die Modulation durch Änderung des Treiberstroms erzeugt wird. Dann sind hohe Modulationsfrequenzen möglich.

Anstelle der Modulation des Treiberstroms ist es vorteilhaft, wenn eine zweite Lichtablenkeinheit mit wenigstens einem Sende-MEMS-Spiegel die Chopperfunktionalität übernimmt, wobei die Modulation des Lichts durch periodisches Ablenken des Lichts erzeugt wird. So können alternativ auf einfache Weise und ohne besondere Ansteuerung bzw. Modulation des Lichtsendeelements mit wenig Bauraum und ohne makroskopisch bewegte Teile Modulationen z. B. in Form von Lichtpulsen erzeugt werden. Diese Ausbildung ist auch deswegen vorteilhaft, da dann das Lichtsendeelement im eingeschwungenen Zustand das Licht erzeugt, was in der Regel hohe Wellenlängen- und Intensitätsstabilität bedeutet. Bei Verwendung von LEDs ergibt sich ein Preisvorteil gegenüber Halbleiterlaser. Interferenzeffekte treten nicht auf.

Wenn ein MEMS-Spiegelarray als zweite Lichtablenkeinheit vorgesehen ist und die Mikrospiegel des Spiegelarrays "als Ganzes" bewegt werden, d. h. alle Mikrospiegelchen werden gleichzeitig umgelenkt, ist die Modulation des Sendelichts nahezu rechteckförmig, also pulsförmig, ausgebildet, was der Chopperfunktionalität entspricht. Diese Signalform birgt in einer nachgelagerten Auswertung Risiken, da sogenannte Harmonische auftreten können, welche das Signal zu Rausch-Verhältnis mindern können. Es ist deshalb vorteilhaft in Weiterbildung der Erfindung die (Mikro)Spiegel des Arrays so zu kippen, dass eine sinusförmige Intensitätsmodulation des Sendelichts entsteht. Hierdurch werden störende Einflüsse infolge höherer Frequenzanteile weiter minimiert.

Zur Nullpunktsbestimmung unter Eliminierung aller spektralen Einflüsse ist in Weiterbildung der Erfindung vorgesehen, dass über einen Teilerspiegel ein Lichtstrahl unter Umgehung des Messvolumens in den Strahlengang einblendbar ist.

In einer Ausführungsform der Erfindung wird das erfindungsgemäße Messgerät für ein Filterkorrelationsverfahren (oder auch Bifrequenzkorrelationsverfahren genannt) eingesetzt. Dann ist das erste Filterelement als optisches Filter ausgebildet, das einen Messwellenlängenbereich durchlässt und das zweite Filterelement als optisches Filter, das einen Referenzwellenlängenbereich durchlässt.

In einer weiteren Ausführungsform wird das erfindungsgemäße Messgerät für ein Gasfilterkorrelationsverfahren eingesetzt. Dann ist vor der Aufteilung in oder nach der Zusammenführung von Mess- und Referenzpfad ein drittes Filterelement vorgesehen, das einen Messwellenlängenbereich durchlässt, wobei das erste Filterelement eine neutrale Gasküvette ist und das zweite Filterelement eine im Messwellenlängenbereich stark absorbierende Gasküvette ist.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung des erfindungsgemäßen Messgeräts in einer Ausführungsform zum Einsatz des Filterkorrelationsverfahrens;
- Fig. 2: eine schematische Darstellung des erfindungsgemäßen Messgeräts in einer Ausführungsform zum Einsatz des Gasfilterkorrelationsverfahrens;
- Fig. 3: eine schematische Darstellung des erfindungsgemäßen Messgeräts in einer weiteren Ausführungsform zum Einsatz des Gasfilterkorrelationsverfahrens.

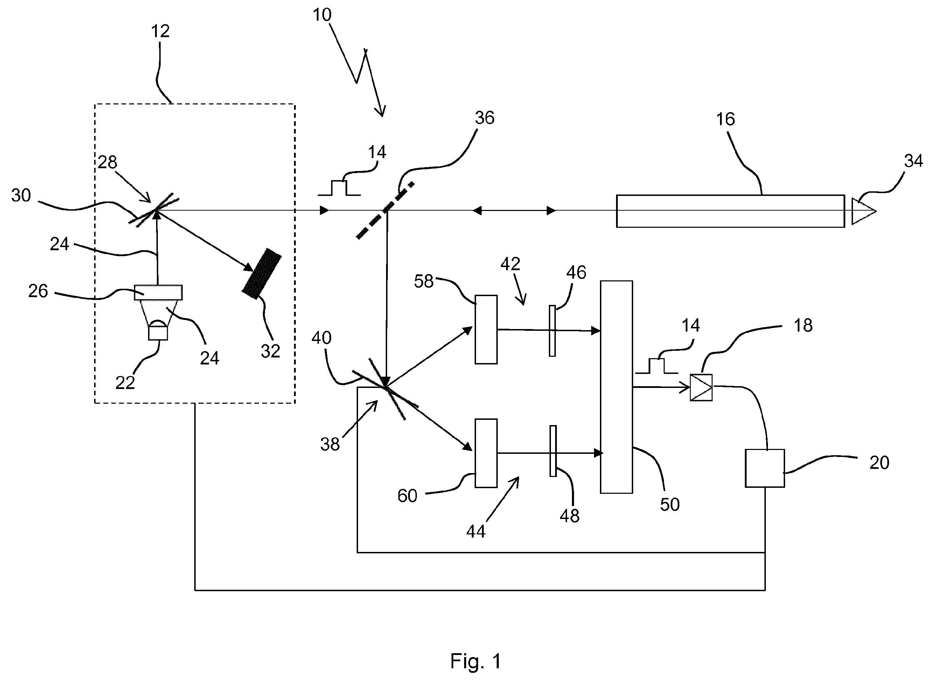

Ein in Fig. 1 dargestelltes erfindungsgemäßes Messgerät 10 umfasst eine breitbandige Lichtquelle 12, die ausgebildet ist, Lichtpulse 14 abzugeben, ein Messvolumen 16, in dem das zu messende Gas vorliegt und einen Lichtdetektor 18 zum Nachweis der Lichtintensität, sowie eine Auswerte- und Steuereinheit 20 zur Ansteuerung der Lichtquelle 12 und zur Auswertung der detektierten Lichtintensitäten mit einem Lock-In-Verfahren. Aus den Lichtintensitäten wird die Konzentration einer zu messenden Gaskomponente bestimmt.

Zur Erzeugung der Modulation des Sendelichts z. B. in Form von Lichtpulsen 14 ist in der Lichtquelle 12 ein CW-Lichtsendeelement 22 vorgesehen, das keine Laserquelle ist. Das Lichtsendeelement 22 kann als Temperaturstrahler oder bevorzugt als LED ausgebildet sein, die kontinuierlich Sendelicht 24 abstrahlt. Das Sendelicht wird mit einer ersten Sendeoptik 26 parallelisiert und trifft auf eine Pulserzeugungsvorrichtung 28 (zweite Lichtablenkeinheit), die in den dargestellten Ausführungsbeispielen als Sende-MEMS-Spiegel oder Sende-MEMS-Spiegelarray ausgebildet ist. Der Einfachheit halber ist in den Figuren nur ein Sende-MEMS-Spiegel 30 (in verschiedenen Winkelstellungen) schematisch dargestellt. Dieser Sende-MEMS-Spiegel 30 schaltet mit einer von der Steuer- und Auswerteeinheit 20 vorgegebenen Frequenz zwischen den beiden dargestellten Stellungen hin und her. In der einen Stellung wird das Licht in einen optischen Sumpf 32 gelenkt, und in der anderen Stellung wird das Licht 24 in Richtung des Messvolumens 16 abgelenkt. Auf diese Weise werden die Lichtpulse 14 erzeugt.

Alternativ könnte die Modulation bzw. Pulserzeugung auch durch Modulation des Treiberstroms der Sende-LED 22 erfolgen, so dass auf den Sende-MEMS-Spiegel 30 verzichtet werden könnte.

Das Sendelicht 24 in Form der Lichtpulse 14 durchsetzt dann das Messvolumen 16, in dem das zu messende Gas mit der zu bestimmenden Gaskomponente vorliegt. Das Messvolumen 16 kann durch eine gegebenenfalls temperierbare Messküvette gebildet sein. Alternativ könnte das Messvolumen 16 auch offen sein, beispielsweise ein Abgaskanal, den das Licht 24 durchquert. Die zu bestimmende Gaskomponente absorbiert in dem Messvolumen 16 eine bestimmte Messwellenlänge des Spektrums der Lichtquelle 12.

Nach Durchtritt durch das Messvolumen 16 werden die Lichtpulse 14 mit einem Reflektor 34 reflektiert, um einen Mehrfachdurchgang durch das Messvolumen 16 zur Erhöhung der Absorption zu ermöglichen.

Mit einem Teilerspiegel 36 wird das reflektierte und das Messvolumen 16 wiederholt durchlaufene Licht abgelenkt in Richtung auf eine (erste) Lichtablenkeinheit 38. Diese umfasst wenigstens einen MEMS-Spiegel 40, bevorzugt ein MEMS-Spiegel-Array. Derartige MEMS-Spiegel oder Spiegelarray sind auch als Digital Mirror Devices (DMD) bekannt. Alle Spiegel eines solchen Array werden gleich angesteuert. In den Figuren ist beispielhaft nur ein MEMS-Spiegel 40 dargestellt. So wird das Licht unter zwei genau definierte Winkel zeitlich versetzt in zwei spektrale Kanäle gelenkt. Die Frequenz, mit der die abwechselnde Umlenkung in einen ersten Pfad 42 und einen zweiten optische Pfad 44 erfolgt und die die beiden spektralen Kanäle bilden, wird von der Steuer- und Auswerteeinheit 20 vorgegeben. Zur Einkopplung auf den jeweiligen Pfad sind erste optische Elemente 58 und 60 vorgesehen.

In dem in Fig. 1 dargestellten ersten Ausführungsbeispiel ist der erste Pfad 42 als Messpfad ausgebildet und enthält ein erstes Filterelement 46, das als optisches Filter ausgebildet ist und einen Messwellenlängenbereich durchlässt, also nur einen schmalen Ausschnitt des Spektrums um die Messwellenlänge herum, die von der zu messenden Gaskomponente absorbiert wird. Die Halbwertsbreite des ersten Filterelements 46 ist auf die Breite der Absorptionsbande der zu messenden Gaskomponente abgestimmt. In dem zweiten optischen Pfad 44 ist ein zweites Filterelement 48 angeordnet, das ebenfalls als optisches Filter ausgebildet ist und einen Referenzwellenlängenbereich durchlässt. Der Referenzwellenlängenbereich ist ein Ausschnitt aus dem Spektrum, das keine Wellenlängen enthält, die von der zu messenden Gaskomponente absorbiert werden. In dieser Ausbildung arbeitet das Messgerät 10 nach dem Filterkorrelationsverfahren (oder auch Bifrequenzkorrelationsverfahren genannt).

Hinter den Filterelementen 46 und 48 werden Messpfade 42 und Referenzpfad 44 mittels eines optischen Elements 50 wieder auf einen gemeinsamen optischen Pfad geführt. Schließlich wird das Licht, das entweder den Messpfad 42 oder den Referenzpfad 44 durchlaufen hat, von dem Lichtdetektor 18 erfasst. Je nach Spektralbereich kann der Lichtdetektor 18 beispielsweise als eine Si-Photodiode oder auch als infrarotempfindlicher Detektor ausgebildet sein.

Wie bereits erwähnt erfolgt die Auswertung und Konzentrationsbestimmung in der Steuer- und Auswerteeinheit 20 mittels Lock-In-Verfahren. Die Modulationsfrequenz der Lichtquelle und die Wechselfrequenz des MEMS-Spiegels 40 werden geeignet gewählt, damit sie mittels der Lock-In-Technik ausreichend getrennt ausgewertet werden können, also um eine hohe Signaltrennung bei der phasenselektiven Gleichrichtung zu erhalten.

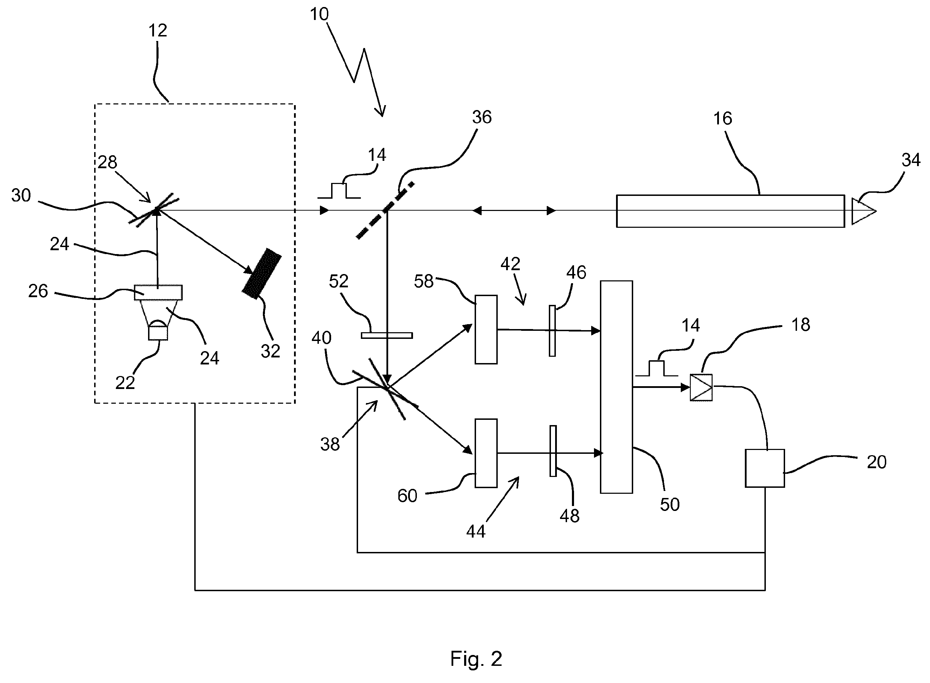

In einem zweiten in Fig. 2 dargestellten Ausführungsbeispiel arbeitet das erfindungsgemäße Messgerät nach dem Gasfilterkorrelationsverfahren. Dazu weist die Vorrichtung einen sehr ähnlichen Aufbau wie das erste Ausführungsbeispiel aus Fig. 1 auf.

Im Unterschied zu diesem ist jetzt zusätzlich im Lichtweg vor der Aufteilung in oder nach der Zusammenführung von Messpfad 42 und Referenzpfad 44 ein drittes Filterelement vorgesehen, das nur den Messwellenlängenbereich in einem schmalen Ausschnitt des Spektrums um die Messwellenlänge herum, die von der zu messenden Gaskomponente absorbiert wird, durchlässt. Des Weiteren ist in diesem Ausführungsbeispiel das erste Filterelement 46 jetzt als neutrale Gasküvette ausgebildet und das zweite Filterelement 48 als eine im Messwellenlängenbereich stark absorbierende Gasküvette. Diese stark absorbierende Gasküvette absorbiert bei den Wellenlängen der Absorptionslinien möglichst vollständig, also möglichst 100% des Lichts.

Dann ist auf dem Referenzpfad 44 die an dem Lichtdetektor 20 ankommende Lichtintensität immer nahezu unabhängig von der zu messenden Gaskomponente und auf dem Messpfad 42 hängt die Intensität von der Konzentration der Messkomponente ab, so dass mit Mess- und Referenzpfad wieder eine Auswertung möglich ist.

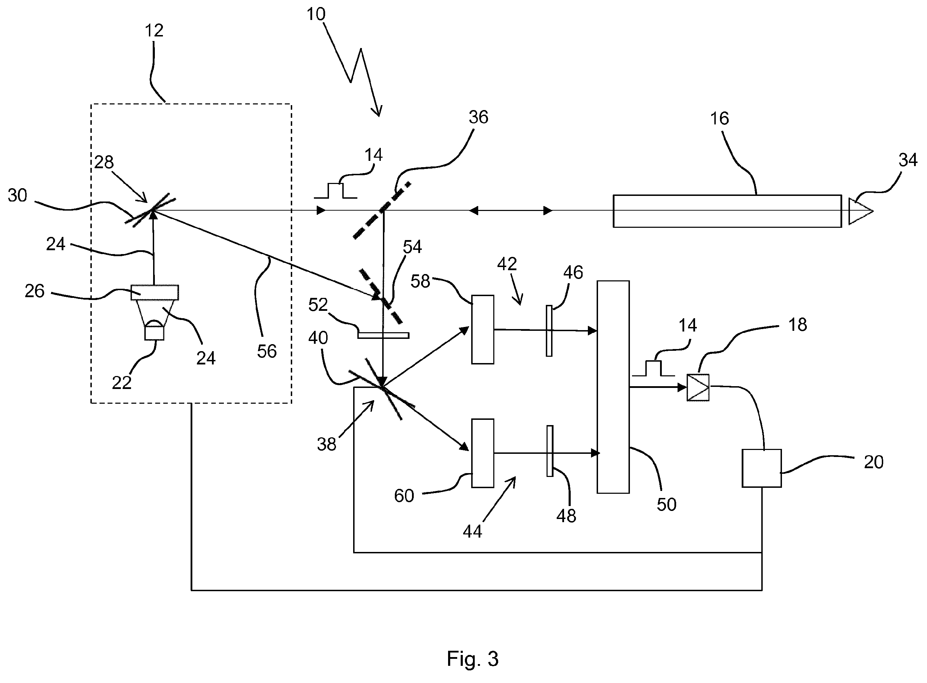

In einer weiteren Ausgestaltung, die sowohl für Filterkorrelationsverfahren als auch für das Gasfilterkorrelationsverfahren geeignet ist, ist zur Nullpunktsbestimmung und Eliminierung aller spektralen Einflüsse vorgesehen, dass wie in Fig. 3 dargestellt über einen Teilerspiegel 54 ein Lichtstrahl 56 unter Umgehung des Messvolumens 16 in den Strahlengang einblendbar ist. Diese Einblendung erfolgt mit Licht 56, das direkt von der Lichtquelle 12 ausgesandt wird und wobei dann in der Lichtquelle 12 der optische Sumpf 32 entfallen kann. In der einen Stellung des Sende-MEMS-Spiegels 30 wird das Licht 24 somit in das Messvolumen 16 und über Messpfad 42 und Referenzpfad 44 zum Nachweis auf den Lichtdetektor 20 gelenkt. Und in der anderen Stellung des Sende-MEMS-Spiegels 30 wird das Licht 56 zur Nullpunktsbestimmung in der beschriebenen Weise eingeblendet und über Messpfad 42 und Referenzpfad 44 zum Nachweis auf den Lichtdetektor 20 gelenkt. Die zeitliche Koordination der Pulserzeugung und Einblendung, also der Ansteuerung des Sen-de-MEMS-Spiegels 30 und der Ansteuerung der Lichtablenkeinheit 38 erfolgt durch die Steuer- und Auswerteeinheit 20. Dieser "Nullpunktsreferenzkanal" liefert Informationen über das (spektrale) Verhalten möglichst vieler optischer Bauteile außerhalb der Messstrecke. Über eine geeignete Verrechnung des Referenzpfades mit dem Messpfad können somit die (internen) spektralen Effekte korrigiert werden.

Wenn ein MEMS-Spiegelarray in der zweiten Lichtablenkeinheit 28 der Lichtquelle 12 vorgesehen ist und die Mikrospiegel des Spiegelarrays "als Ganzes" bewegt werden, d. h. alle Mikrospiegelchen werden gleichzeitig umgelenkt, ist die Modulation des Sendelichts nahezu rechteckförmig, also pulsförmig ausgebildet wie oben beschrieben und bei 14 dargestellt. Das entspricht der Chopperfunktionalität. Eine rechteckförmige Signalform birgt aber in der nachgelagerten Auswertung Risiken, da sogenannte Harmonische auftreten können, welche das Signal-zu-Rausch-Verhältnis mindern können. Es ist deshalb vorteilhaft in dieser Ausführungsform die (Mikro)Spiegel des Arrays so zu kippen, dass nicht alle Mikrospiegel gleichzeitig synchron gekippt werden, sondern nacheinander immer mehr Mikrospiegel gekippt werden, so dass letztlich eine sinusförmige Intensitätsmodulation des umgelenkten Sendelichts entsteht. Hierdurch werden störende Einflüsse infolge höherer Frequenzanteile weiter minimiert.

## Patentansprüche

1. Messgerät zur Messung einer bestimmten Gaskomponente,
- mit einer breitbandigen Lichtquelle (12), die ausgebildet ist, Licht (14) intensitätsmoduliert abzugeben,
- und das Licht (14) ausgehend von der Lichtquelle (12) ein Messvolumen (16), in der das zu messende Gas vorliegt, durchsetzt,
- und das Licht (14) nach Durchlaufen des Messvolumens (16) mit einer ersten Lichtablenkeinheit (38), die wenigstens einen MEMS-Spiegel (40) umfasst abwechselnd auf zwei optische Pfade (42 und 44) umlenkbar ist,
- und der eine erste Pfad (42) als Messpfad ausgebildet ist und ein erstes Filterelement (46) enthält, das einen Messwellenlängenbereich durchlässt,
- und der andere zweite Pfad (44) als Referenzpfad ausgebildet ist und ein zweites Filterelement (48) enthält, das einen Referenzwellenlängenbereich durchlässt,
- mit einem optischen Element (50), das Mess- und Referenzpfad (42 und 44) wieder auf einen gemeinsamen optischen Pfad führt,
- mit einem Lichtdetektor (18) und
- mit einer Auswerte- und Steuereinheit (20) zur Ansteuerung der Lichtquelle (12) und der Lichtablenkeinheit (38) und zur Auswertung detektierter Lichtintensitäten und damit Messung der Gaskomponente.

2. Messgerät nach Anspruch 1, **dadurch gekennzeichnet, dass** die Lichtquelle ein CW-Lichtsendeelement und eine Choppervorrichtung zur Erzeugung von Lichtpulsen aufweist.

3. Messgerät nach Anspruch 1, **dadurch gekennzeichnet, dass** die Lichtquelle eine LED als CW-Lichtsendeelement umfasst und die Modulation durch Änderung des Treiberstroms erzeugt wird.

4. Messgerät nach Anspruch 1, **dadurch gekennzeichnet, dass** die Lichtquelle (12) ein CW-Lichtsendeelement und eine zweite Lichtablenkeinheit (28) mit wenigstens einem Sende-MEMS-Spiegel (30) aufweist, wobei die Modulation des Lichts durch periodisches Ablenken des Lichts erzeugt wird.

5. Messgerät nach Anspruch 4, **dadurch gekennzeichnet, dass** über einen Teilerspiegel (54) ein Lichtstrahl (56) der Lichtquelle (12) unter Umgehung des Messvolumens (16) auf den gemeinsamen optischen Pfad vor der ersten Ablenkeinheit (38) einblendbar ist.

6. Messgerät nach einem der vorhergehenden Ansprüche 4 oder 5, **dadurch gekennzeichnet, dass** die zweite Lichtablenkeinheit (28) ein MEMS-Spiegelarray aufweist.

7. Messgerät nach Anspruch 4, **dadurch gekennzeichnet, dass** die Modulation des Sendelichts sinusförmig ist.

8. Messgerät nach einem der vorhergehenden Ansprüche, **dadurch gekennzeichnet, dass** das erste Filterelement (46) als optisches Filter ausgebildet ist, das einen Messwellenlängenbereich durchlässt und das zweite Filterelement (48) als optisches Filter ausgebildet ist, das einen Referenzwellenlängenbereich durchlässt.

9. Messgerät nach einem der vorhergehenden Ansprüche, **dadurch gekennzeichnet, dass** vor der Aufteilung in oder nach der Zusammenführung von Mess- und Referenzpfad (42 und 44) ein drittes Filterelement (52) vorgesehen ist, das einen Messwellenlängenbereich durchlässt und das erste Filterelement eine neutrale Gasküvette ist und das zweite Filterelement eine im Messwellenlängenbereich stark absorbierende Gasküvette ist.

## Claims

1. Device for measuring a specific gas component,
- having a broadband light source (12), which emits intensity-modulated light (14),
- and the light (14) emitted from the light source (12) passes through a measurement volume (16) in which the gas to be measured is provided,
- and the light (14) can be deflected alternately in two optical paths (42 and 44) after passing through the measurement volume (16) with a first light deflection unit (38) which comprises at least one MEMS mirror (40),
- and a first path (42) is designed as a measuring path and comprises a first filter element (46) which transmits a measuring wavelength range,
- and the other second path (44) is designed as a reference path and comprises a second filter element (48) that transmits a reference wavelength range,
- with an optical element (50) that unites measurement and reference path (42 and 44) back onto a common optical path,
- a light detector (18) and
- with an evaluation and control unit (20) for driving the light source (12) and the light deflection unit (38) and for the evaluation of detected light intensities and thus measurement of the gas component.

2. Device according to claim 1, **characterized in that** the light source is a CW light-emitting element and comprises a chopper device for generating pulses of light.

3. Device according to claim 1, **characterized in that** the light source comprises an LED as a CW light emitting element and the modulation is generated by change of the driving current.

4. Device according to claim 1, **characterized in that** the light source (12) comprises a CW light emitting element and a second light deflection unit (28) with at least one transmitter MEMS mirror (30), wherein the modulation of the light is produced by periodically deflecting the light.

5. Device according to claim 4, **characterized in that** a light beam (56) of the light source (12) is blended in on the common optical path via a beam splitter (54) before the first deflection unit (38) while bypassing the measuring volume (16).

6. Device according to any one of the preceding claims 4 or 5, **characterized in that** the second light deflection unit (28) comprises a MEMS mirror array.

7. Device according to claim 4, **characterized in that** the modulation of the transmitted light is sinusoidal.

8. Device according to one of the preceding claims, **characterized in that** the first filter element (46) is designed as an optical filter that transmits a measuring wavelength range and the second filter element (48) is designed as an optical filter that transmits a reference wavelength range.

9. Device according to one of the preceding claims, **characterized in that**, before the division in or after the bringing together of the measurement and reference path (42 and 44), a third filter element (52) is provided that transmits a measuring wavelength range, and the first filter element is a neutral gas cell, and the second filter element is a gas cuvette which is highly absorbent in the measurement wavelength range.

## Revendications

1. Dispositif de mesure d'une composante de gaz spécifique,
- comportant une source de lumière à large bande (12), qui émet une lumière modulée en intensité (14),
- et la lumière (14) émise par la source de lumière (12) passe à travers un volume de mesure (16), dans lequel le gaz à mesurer est fourni,
- et la lumière (14) peut être dévié alternativement dans deux trajets optiques (42 et 44) après son passage dans le volume de mesure (16) avec une première unité de déviation de lumière (38) qui comprend au moins un miroir MEMS (40),
- et le premier trajet (42) est réalisé sous la forme d'un trajet de mesure et comprend un premier élément de filtre (46) qui laisse passer une zone de longueur d'onde de mesure,
- et l'autre deuxième trajet (44) est réalisé sous la forme d'un trajet de référence, et comprend un deuxième élément filtrant (48) qui laisse passer une zone de longueur d'onde de référence,
- avec un élément optique (50) qui unit le trajet de la mesure et de référence (42 et 44) sur un trajet optique commun,
- avec un détecteur de lumière (18) et
- avec une unité d'évaluation et de commande (20) pour commander la source lumineuse (12) et l'unité de déviation de lumière (38) et pour l'évaluation des intensités lumineuses détectées et donc la mesure de la composante de gaz.

2. Dispositif de mesure selon la revendication 1, **caractérisé en ce que** la source de lumière comprend un élément d'émission de lumière CW et un dispositif de hachage pour générer des impulsions de lumière.

3. Dispositif de mesure selon la revendication 1, **caractérisé en ce que** la source de lumière comprend une LED comme élément d'émission de lumière CW et la modulation est générée par variation du courant de pilote.

4. Dispositif de mesure selon la revendication 1, **caractérisé en ce que** la source lumineuse (12) comprend un élément d'émission de lumière CW et une seconde unité de déviation de lumière (28) avec au moins un miroir émetteur MEMS (30), et la modulation de la lumière est générée par la déviation périodique de la lumière.

5. Dispositif de mesure selon la revendication 4, **caractérisé en ce qu'**un faisceau lumineux (56) de la source lumineuse (12), à travers d'un diviseur de faisceau (54) et en contournant le volume de mesure (16), peut être affichée sur un trajet optique commun devant la première unité de déviation (38).

6. Dispositif de mesure selon l'une des revendications précédentes 4 ou 5, **caractérisé en ce que** la deuxième unité de déviation de lumière (28) comprend un réseau de miroirs MEMS.

7. Dispositif de mesure selon la revendication 4, **caractérisé en ce que** la modulation de la lumière transmise est sinusoïdale.

8. Dispositif de mesure selon l'une des revendications précédentes, **caractérisé en ce que** le premier élément filtrant (46) est réalisé sous la forme d'un filtre optique qui laisse passer une zone de longueur d'onde de mesure et le deuxième élément filtrant (48) est réalisé sous la forme d'un filtre optique qui laisse passer une zone de longueur d'onde de référence.

9. Dispositif de mesure selon l'une des revendications précédentes, **caractérisé en ce que**, avant la division ou après l'union du trajet de mesure et de référence (42 et 44), un troisième élément filtrant (52) est prévu qui laisse passer une zone de longueur d'onde de mesure et le premier élément filtrant est une cellule à gaz neutre, et le second élément filtrant est une cuvette de gaz qui est hautement absorbante dans la zone de longueur d'onde de mesure.
